Europäisches Patentamt

European Patent Office

Office européen des brevets

(19)

(11) Publication number: **0 202 797 B1**

## EUROPEAN PATENT SPECIFICATION

(12)

(45) Date of publication of patent specification: **27.01.93**    (51) Int. Cl.⁵: **C01B 33/20**, C01B 33/34, C01B 35/10

(21) Application number: **86303223.1**

(22) Date of filing: **29.04.86**

(54) **A method for the synthesis of zeolites.**

(30) Priority: **14.05.85 US 733818**

(43) Date of publication of application:
**26.11.86 Bulletin 86/48**

(45) Publication of the grant of the patent:
**27.01.93 Bulletin 93/04**

(84) Designated Contracting States:
**BE DE FR GB IT NL SE**

(56) References cited:
**EP-A- 0 106 552**
**EP-A- 0 130 809**
**FR-A- 2 208 950**

(73) Proprietor: **MOBIL OIL CORPORATION**
**150 East 42nd Street**
**New York New York 10017(US)**

(72) Inventor: **Kiliany, Thomas Richard, Jr.**
**704 East Warring Street Apt, 147**
**Dayton Texas 77535(US)**
Inventor: **Dwyer, Francis Gerard**
**1128 Talleyrand Road**
**West Chester Pennsylvania 19380(US)**
Inventor: **McWilliams, John Paul**
**117 S. American Street Woodbury**
**New Jersey 08096(US)**
Inventor: **Chu, Yung-Feng**
**5 Lakeview Drive**
**Cherry Hill New Jersey 08003(US)**

(74) Representative: **Cooper, John Anthony**
**Mobil Court 3 Clements Inn**
**London WC2A 2EB(GB)**

Rank Xerox (UK) Business Services

EP 0 202 797 B1

## Description

The invention is directed to a method for the synthesis of zeolites and, in particular, of the zeolite ZSM-5.

Naturally occurring and synthetic zeolites have been demonstrated to exhibit catalytic properties for various types of hydrocarbon conversions. Certain zeolites are ordered porous crystalline aluminosilicates having definite crystalline structure as determined by X-ray diffraction studies. Such zeolites have pores of uniform size which are uniquely determined by unit structure of the crystal. The zeolites are referred to as "molecular sieves" because the uniform pore size of a zeolite material may allow it to selectively absorb molecules of certain dimensions and shapes.

Conventionally, the structure of aluminosilicate zeolites is considered as being based on an infinitely extending three-dimensional network of $AlO_4$ and $SiO_4$ tetrahedra linked to each other by sharing of the oxygen atoms. Furthermore, aluminosilicate zeolites may generally be represented by the empirical formula

$$M_{2/n}O.Al_2O_3.xSiO_2.yH_2O.$$

Wherein M is sodium, potassium, magnesium, calcium, strontium and/or barium; x is equal to or greater than 2, (since $AlO_4$ tetrahedra are joined only to $SiO_4$ tetrahedra), n is the valence of the cation designated M; and the ratio of the total of silicon and aluminum atoms to oxygen atoms is 1:2.

The prior art describes a variety of synthetic zeolites. These zeolites have come to be designated by letter or other convenient symbols, as illustrated by zeolite Z (United States Patent No. 2,882,243); zeolite X (United States Patent No. 2,882,244); zeolite Y (United States Patent No. 3,130,007); zeolite ZK-5 (United States Patent No. 3,247,195); zeolite ZK-4 (United States Patent No, 3,314,752); zeolite ZSM-11 (United States Patent No. 3,709,979) and zeolite ZSM-23 (United States Patent No. 3,076,842).

Crystalline ZSM-5 and one method of its preparation are described in U.S. Patent 3,702,886, which also describes the distinctive X-ray diffraction pattern of ZSM-5 which distinguishes it from other known crystalline zeolites. A crystalline silicate composition having the structure of ZSM-5 is described in U.S. Patent Re. 29,948, while U.S. Patent 4,139,600 teaches a method for synthesis of zeolite ZSM-5 from a reaction mixture comprising, an alkyldiamine as a directing agent.

U.S. Patent 4,296,083 claims synthesizing zeolites characterized by a constraint index of 1 to 12 and an alumina/silica mole ratio of not greater than 0.083 from a specified reaction mixture containing an organic nitrogen-containing cation provided by an amine selected from the group consisting of triethylamine, trimethylamine, tripropylamine, ethylenediamine, propanediamine, butanediamine, pentanediamine, hexanediamine, methylamine, ethylamine, propylamine, butylamine, dimethylamine, diethylamine, dipropylamine, benzylamine, aniline, pyridine, piperidine and pyrrolidine.

U.S. Patent 4,151,189 relates to a method for synthesizing zeolites ZSM-5, ZSM-12, ZSM-35 and ZSM-38 containing an organic nitrogen cation from a specified reaction mixture containing a primary amine having 2 to 9 carbon atoms as a directing agent.

U.S. Patent 4,341,748 relates to the synthesis of ZSM-5 structure from reaction mixtures comprising ethanol; ZSM-5 seeds; ethanol and seeds; ethanol and ammonium hydroxide; and ethanol, ammonimum hydroxide and seeds.

U.S. Patent 4,100,262 teaches synthesis of ZSM-5 from a reaction mixture comprising a tetraalkylammonium source and a tetraureacobalt (II) complex.

The silicon/aluminum atomic ratio of a given zeolite is often variable. For example, zeolite X can be synthesized with silicon/aluminum atomic ratios of from 1 to 1.5, while that ratio in zeolite Y is from 1.5 to 3. In some zeolites, the upper limit of the silicon/aluminum atomic ratio is unbounded. ZSM-5 is one such example wherein the silicon/aluminum atomic ratio is at least 2.5 substantially up to infinity. United States Patent No. 3,941,871, reissued as RE. 29,948, discloses a porous crystalline silicate made from a reaction mixture containing no deliberately added aluminum and exhibiting the X-ray diffraction pattern characteristic of ZSM-5.

The invention is directed to a method of making zeolite which allows for increased amounts of zeolite production and for flexibility in the exact composition of the zeolite product.

Accordingly, the invention resides in a method for making zeolite comprising:

a) providing a solution of a silicate;

b) providing a precipitating reagent which is effective to precipitate said silicate as silica from said solution;

c) continuously contacting said solution which said precipitating reagent to effect continuous change of concentration of said silicate and to form an insoluble silica precipitate having a particle size of 1-500 micrometre; and

d) introducing said silica precipitate into a reaction mixture, which is maintained under conditions effective to convert said silica into the required and which contains 20-40% silica solids loading and 0 to 10 weight percent seeds of the required zeolite.

Thus an essential component of the ZSM-5 crystallization reaction mixture used in the present method is a silica precipitate having a particle size which exceeds the particle size at which silica gel formation occurs. Preferably, the silica precursor precipitation is undertaken in a liquid reaction mixture to which no aluminum or alumina source has been added since this allows flexibility in varying the Si:Al atomic ratio of the final zeolite.

The method of the invention comprises formation of a precipitated silica precursor under conditions to insure certain minimal particle size of the precursor and subsequent reaction of the precursor, in crystallization reaction mixtures of controlled composition, to form the required zeolite. The method has the advantage that increased through output and yield is realized. Moreover, control of reaction conditions can determine the crystal size of the zeolite which is produced.

The silica precipitate is formed from a solution of a silica source. Conveniently, the solution is an aqueous solution of a pH ranging from 9 to 12. The source of silica can be any soluble silicate and is preferably sodium silicate.

The silica precursor is formed by continuous precipitation from the solution phase. Accordingly, precipitation comprises initiating precipitation and maintaining said precipitation so that the precipitation step is continuous and effects a continuous change of the concentration in the silicate solution.

Alteration of the composition of the solution of the silica source is undertaken by introducing a precipitating reagent. In one embodiment, the precipitating reagent is a source of acid, such as a solution of a mineral acid, e.g. $H_2SO_4$, HCl, and $HNO_3$. The acid solution conveniently has a pH ranging from essentially 0 to 6.

Preferably the silica is precipitated alone in the absence of sources of other zeolitic framework elements. This embodiment is preferred for the reason that it allows greater flexibility in varying the ratios of zeolite elemental components in the zeolite product produced when the silica is subjected to zeolite crystallization. In this embodiment, both the precipitating reagent and the solution of silica source are free of intentionally added alumina or alumina source. That is, no aluminum is deliberately added to the silica precipitation reaction mixture. However, aluminum is ubiquitous and so may be present in minor amounts due to impurities in the precursors of the reactants or impurities extracted from the reaction vessel. Alternatively silica precipitation can be in the presence of soluble sources of other zeolite framework elements including deliberately added aluminum, gallium, boron, iron and chromium. The soluble source of these other zeolitic framework components can be eg., nitrates. The coprecipitation product would be, e.g., an amorphous gallo-silicate, boro-silicate, or ferrosilicate. Preferably the amount of alumina in the silica precursor precipitate is less than about 0.5 and more preferably lower than 0.2 weight percent.

Continuous precipitation of the amorphous silica precursor is effected by introducing the solution of silica source and the precipitating reagent to a reaction zone while maintaining the molar ratio of silica source to precipitating reagent substantially constant. In one embodiment, the precipitating reagent and the silica source are introduced simultaneously into the reaction zone.

The continuous precipitation of silica precursor produces two results. Firstly, silica gel formation is substantially eliminated and secondly the particle size of the precipitated silica precursor exceeds the silica particle size at which silica gel formation is possible. The precipitated silica precursor comprises agglomerated solids in the shape of microspheres. Suspensions of these particles exhibit low viscosities at high solids loadings in subsequent processing, for example, even at solids loading equal to or greater than 30% and even at 35% solids. This is in marked contrast to non-controlled neutralization which results in a solid, non-stirrable mass. The particle size of the silica precipitate ranges between $1\text{-}500\mu$ but the average size is $50\text{-}70\mu$.

Other conditions affecting precipitation include time, pH and temperature. The temperature of the precipitation mixture preferably ranges from 27 to 150°C (80 to 300°F). The time of contact of the solution of silica source and the precipitating reagent can range from several minutes to several hours with the pH preferably being maintained from 6 to 11. Generally, the silica precursor is processed by isolating it, eg., by filtration, and removing soluble contaminants therefrom, by washing and/or ion exchange. This stage can be considered a solids consolidation step.

The silica precursor is then crystallized to produce a crystalline silicate zeolite.

Crystallization is conducted by initially preparing a reaction mixture containing water, the silica precursor, a source of $OH^-$ ion and, if desired, a source of alumina and/or an oxide of gallium, boron, iron, chromium or mixtures thereof. Where a source of alumina is added, the source can be any aluminum salt, for example, aluminum sulfate. The amount of the source of alumina etc., will depend on the desired ultimate aluminum content of the zeolite and on the zeolite production method. The silica precursor and alumina source can be admixed together in any order without adverse affects.

The crystallization process will now be described in detail with reference to the formation of the zeolite ZSM-5. It will, however, be apparent to anyone of ordinary skill in the art to modify the procedure so as to produce any other known zeolite.

Preferably there is no organic, sometimes referred as a "directing agent", present in the reaction mixture during crystallization. The absence of organic appears to dictate that the maximum $SiO_2 : Al_2O_3$ molar ratio of the resultant ZSM-5 product is about 100. The advantages of effecting the crystallization in the absence of organic are reduction in cost, reduction in environmental concerns due to the volatility of the organic and obviation of the subsequent processing steps necessary to remove the organic. Where there is no organic present, the reaction mixture preferably has the following molar composition:

| | |
|---|---|
| $SiO_2/Al_2O_3$ | 28.5 to 100 |
| $H_2O/SiO_2$ | 1 to 200 |
| $OH^-/SiO_2$ | 0.02 to 0.4 and |
| $M_{2/n}O/SiO_2$ | 0.02 to 0.5 |

where M is an alkali or alkaline earth metal of valence n.

Alternatively, the reaction mixture can contain an organic directing agent preferably having the formula $R_1 R_2 R_3 J$, or $R_1 R_2 R_3 R_4 J^+$ wherein J is an element of Group VB, preferably nitrogen, each of $R_1$, $R_2$ and $R_4$ is hydrogen or an alkyl or aryl group having 1-7 carbon atoms, and $R_3$ is an alkyl group or aryl group having 1-7 carbon atoms, with each alkyl group preferably being propyl. The presence of the organic enables the ZSM-5 to be produced with a $SiO_2:Al_2O_3$ ratio of greater than 30 substantially up to infinity and allows the production of smaller crystal materials than are obtainable without the organic. Preferably, the reaction mixture with the organic has the following molar composition:

| | |
|---|---|
| $SiO_2/Al_2O_3$ | greater than 20 |
| $H_2O/SiO_2$ | 0.5 to 200 |
| $OH^-/SiO_2$ | 0 to 0.4 |
| $Organic/SiO_2$ | 0.1 to 0.4 |
| $M_{2/n}O/SiO_2$ | 0 to 0.5 |

where M is an alkali or alkaline earth metal of valence n. Most preferably, the organic is n-propylamine.

The reaction mixture can be prepared either batchwise or continuously. Crystal size and crystallization time of the crystalline material, will vary with the nature of the reaction mixture employed and the crystallization conditions. In all cases, synthesis of the desired crystals may be facilitated by the presence of at least 0.001 percent, preferably at least 0.10 percent and still more preferably at least 1.0 percent, seed crystals (based on solids weight) preferably of a previously prepared crystalline ZSM-5 product. The source of seeds may be a slurry from the mother liquor of a previous crystallization, processed or unprocessed, recycled to the crystallizer vessel.

Using the silica precipitate produced as described above, it is found that crystallization can be conducted at silica solids loading up to 40% by weight. For economic reasons, the overall solids content of the crystallization mixture is preferably at least 20% by weight.

Crystallization of the ZSM-5 can be carried out under either static or stirred conditions in polypropylene jars or in stainless steel autoclaves at 50-250°C for 2-3 hours to 150 days, preferably 5-100 hours. Where the reaction mixture contains an organic directing agent, crystallization is preferably conducted at 85-200°C, whereas when an organic directing agent is absent the preferred temperature is 140-200°C. Thereafter, the crystals are separated from the liquid and recovered.

The resultant zeolite ZSM-5 can be identified, in terms of mole ratios of oxides and in the anhydrous state, as follows:

$$(0.002 \text{ to } 10)Q_{2/n}O:(0.001 \text{ to } 5)Al_2O_3:(100)SiO_2$$

wherein Q is at least one cation having a valence n, including cation M and any organic material used as a directing agent.

The X-ray diffraction pattern of the crystalline ZSM-5 product of the present invention has the characteristic lines shown in Table 1.

## Table 1

| Interplanar d-Spacing (A) | Relative Intensity (I/I$_o$) |
|---|---|
| 11.1 ± 0.3 | s |
| 10.0 ± 0.3 | s |
| 7.4 ± 0.2 | w |
| 7.1 ± 0.2 | w |
| 6.3 ± 0.2 | w |
| 6.04± 0.2 | w |
| 5.56 ±0.1 | w |
| 5.01 ±0.1 | w |
| 4.60 ±0.08 | w |
| 4.25 ±0.08 | w |
| 3.85 ±0.07 | vs |
| 3.71 ±0.05 | s |
| 3.04 ±0.03 | w |
| 2.99 ±0.02 | w |
| 2.94 ±0.02 | w |

These values were determined by standard technique. The radiation was the K-alpha doublet of copper, and a diffraction equipped with a scintillation counter and a strip chart pen recorder was used. The peak heights, I, and the positions as a function of two times theta, where theta is the Bragg angle, were read from the spectrometer chart. From these, the relative intensities, 100 I/I$_o$ where I$_o$ is the intensity of the strongest line or peak, and d (obs.), the interplanar spacing in Angstrom units (A) corresponding to the recorded lines were calculated.

Ion exchange of the crystalline ZSM-5 product may subsequently be conducted to effect ammonium exchange at the acidic sites of the material. The source of the ammonium ion is not critical. Thus the source can be ammonium hydroxide or an ammonium salt such as ammonium nitrate, ammonium sulfate, ammonium chloride and mixtures thereof, preferably as an aqueous solution. The pH of the ion exchange medium is also not critical but is generally maintained at 7 to 12. Ammonium exchange may be conducted for a period of time ranging from 0.5 to 20 hours at a temperature ranging from ambient up to 100°C. The ion exchange may be conducted in multiple stages. Calcination of the ammonium exchanged will produce the zeolite in its acid form. Calcination can be effected at temperatures up to about 600°C.

Synthetic zeolite ZSM-5 prepared in accordance herewith can be used in the alkali metal form, hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated in or on to zeolite ZSM-5 such as, for example, by, in the case of platinum, treating the zeolite with a platinum metal-containing ion. Suitable platinum compounds for this purpose include chloroplatinic acid, platinous chloride and various compounds containing the platinum amine complex. Combinations of metals and methods for their introduction can also be used.

Synthetic zeolite ZSM-5, when employed either as an adsorbent or as a catalyst in a hydrocarbon conversion process, should be dehydrated at least partially. This can be done by heating to a temperature

5

EP 0 202 797 B1

in the range of from 200°C to 600°C in an inert atmosphere, such as air, nitrogen, etc. and at atmospheric or subatmospheric pressures for between about 1 and 48 hours. Dehydration can also be performed at lower temperature merely by placing the zeolite in a vacuum, but a longer time is required to obtain a particular degree of dehydration.

As above mentioned, synthetic zeolite ZSM-5 prepared in accordance herewith can have the original cations associated therewith replaced by a wide variety of other cations according to techniques well known in the art. Typical further replacing cations include metal cations and mixtures thereof. Of the replacing metallic cations, particular preference is given to cations of metals such as rare earths, Mn, Ca, Mg, Zn, Cd, Pd, Ni, Cu, Ti, Al, Sn, Fe and Co.

A typical ion exchange technique would be to contact the synthetic zeolite with an aqueous solution of a salt of the desired replacing cation or cations. Although a wide variety of salts can be employed, particular preference is given to chlorides, nitrates and sulfates. Representative ion exchange techniques are disclosed in a wide variety of patents including U.S. Patents 3,140,249; 3,140,251; and 3,140,253.

Following contact with the metal salt solution of the desired replacing cation, the zeolite is then preferably washed with water and dried at a temperature ranging from 65°C to 315°C and thereafter may be calcined in air or an inert gas at temperatures ranging from 200°C to 550°C for periods of time ranging from 1 to 48 hours or more to produce a catalytically-active thermal decomposition product thereof.

As in the case of many catalysts, it may be desirable to incorporate the zeolite ZSM-5 hereby prepared with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina. The latter may be either naturally occurring or in the form of gelatinous precipitates, sols or gels including mixtures of silica and metal oxides. Use of a material in conjunction with the zeolite ZSM-5, i.e. combined therewith, which is active, may enhance the conversion and/or selectivity of the catalyst in certain organic conversion processes. Inactive materials suitably serve as diluents to control the amount of conversion in a given process so that products can be obtained economically and orderly without employing other means for controlling the rate or reaction. Frequently, crystalline silicate materials have been incorporated into naturally occurring clays, e.g. bentonite and kaolin. These materials, i.e. clays, oxides, etc., function, in part, as binders for the catalyst. It is desirable to provide a catalyst having good physical strength, because in petroleum refinery processing, the catalyst is often subjected to conditions, which tend to break the catalyst down into powder-like materials which cause problems in processing.

Naturally occurring clays which can be composited with the hereby synthesized zeolite ZSM-5 include the montmorillonite and kaolin families which include the sub bentonites, and the kaolins commonly known as Dixie, McNamee, Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolite ZSM-5 catalyst hereby synthesized can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of these components could also be used.

The relative proportions of finely divided crystalline silicate and inorganic oxide gel matrix vary widely with the crystalline silicate content ranging from 0.1 to 90 percent by weight, and more usually in the range of 10 to 70 percent by weight of the composite.

In general, organic compounds such as, for example, hydrocarbons, alcohols and ethers, may be converted to conversion products such as, for example, aromatics and lower molecular weight hydrocarbons, over the catalytically active form of the composition of this invention by contact under organic compound conversion conditions including a temperature of 100°C to 800°C a pressure of 10 to 20265 kPa (0.1 to 200 atmospheres), a weight hourly space velocity of 0.08 to 2000 $hr^{-1}$ and a hydrogen/feedstock organic compound mole ratio of 0 (no added hydrogen) to 100.

Such conversion processes include cracking hydrocarbons to lower molecular weight hydrocarbons with reaction conditions including a temperature of from 300°C to 800°C, a pressure of 10 to 3550 kPa (0.1 to 35 atmospheres) and a weight hourly space velocity of 0.1 to 100; dehydrogenating hydrocarbon compounds with reaction conditions including a temperature of 300° to 700°C, a pressure of 10 to 1020 kPa (0.1 to 10 atmospheres) and a weight hourly space velocity of 0.1 to 50; converting paraffins to aromatics with reaction conditions including a temperature of 100° to 700°C, a pressure of 10 to 6080 kPa (0.1 to 60 atmospheres), a weight hourly space velocity of 0.5 to 400 and a hydrogen/hydrocarbon mole ratio of 0 to 20; converting olefins to aromatics, e.g. benzene, toluene and xylenes, with reaction conditions including a

6

temperature of 100° to 700°C, a pressure of 10 to 6080 kPa (0.1 to 60 atmospheres), a weight hourly space velocity of 0.5 to 400 and a hydrogen/hydrocarbon mole ratio of from about 0 to about 20; converting alcohols, e.g. methanol, or ethers, e.g. dimethylether, or mixtures thereof to hydrocarbons including aromatics with reaction conditions including a temperature of 275 to 600°C, a pressure of 50 to 5070 kPa (0.5 to 50 atmospheres) and a liquid hourly space velocity of 0.5 to 100; isomerizing xylene feedstock components to product enriched in p-xylene with reaction conditions including a temperature of 230 to 510°C, a pressure of 100 to 3550 kPa (1 to 35 atmospheres), a weight hourly space velocity of 0.1 to 200 and a hydrogen/hydrocarbon mole ratio of 0 to 100; disproportionating toluene to product comprising benzene and xylenes with reaction conditions including a temperature of 200 to 760°C, a pressure of from about atmospheric to about 60 atmospheres and a weight hourly space velocity of from about 0.08 to about 50; alkylating aromatic hydrocarbons, e.g. benzene and alkylbenzenes, in the presence of an alkylating agent, e.g. olefins, formaldehyde, alkyl halides and alcohols, with reaction conditions including a temperature of from about 340 to about 500°C, a pressure of from atmospheric to about 200 atmospheres, a weight hourly space velocity of from about 2 to about 2000 and an aromatic hydrocarbon/alkylating agent mole ratio of from about 1/1 to about 20/1; and transalkylating aromatic hydrocarbons in the presence of polyalkylaromatic hydrocarbons with reaction conditions including a temperature of from about 340 to about 500°C, a pressure of 100 to 20265 kPa (to 200 atmospheres), a weight hourly space velocity of 10 to 1000 and an aromatic hydrocarbon/polyalkylaromatic hydrocarbon mole ratio of 1/1 to 16/1.

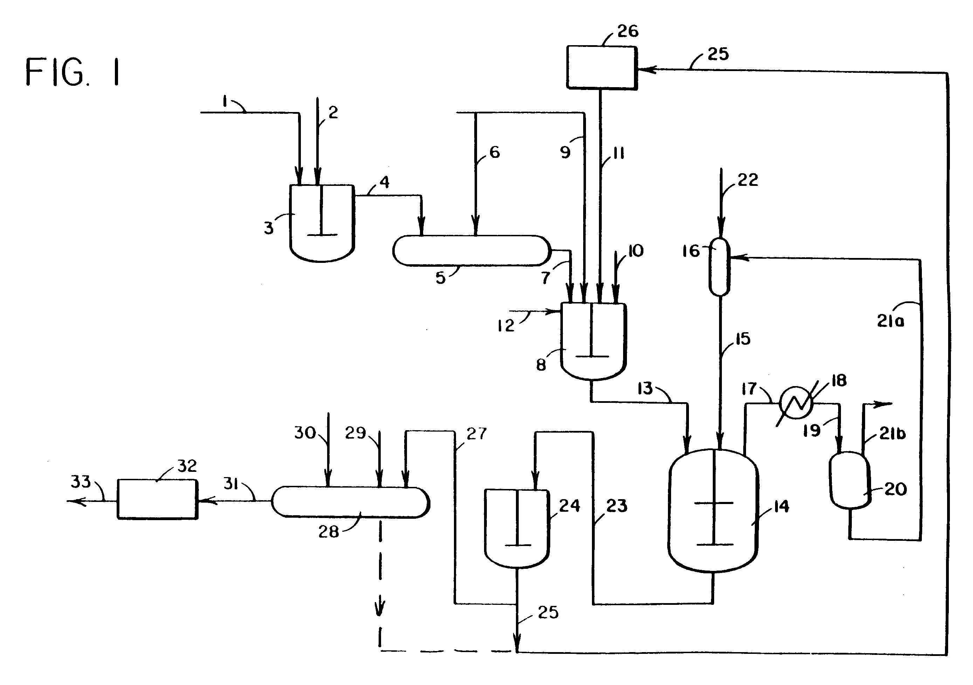

The invention will now be more particularly described with reference to the accompanying drawing which is a flow sheet illustrating a method for producing ZSM-5 in accordance with one embodiment of the invention.

Referring to the drawing, in the embodiment shown a first solution of dilute sulfuric acid or a mixture of dilute sulfuric acid and dilute of sulfuric acid or of a mixture of dilute sulfuric acid and dilute aluminum sulfate, i.e. acid aluminum solution, is passed via line 1 to a continuous reactor 3. A second aqueous solution of sodium silicate is also fed to the reactor 3 via line 2 so as to react with the first solution and produce a slurry of silicate or aluminosilicate gel particles. The contents of reactor 3 are preferably stirred to form a visible vortex. In addition, flow rates are preferably controlled to yield an apparent residence time in reactor 3 in excess of 3 minutes and typically about 30 minutes. Solution strengths are such that the solids content of the resulting slurry ranges from 10 wt. % to 20 wt. %, preferably about 15 wt. %.

The reaction product from reactor 3 is passed via line 4 to a first filtering means 5, e.g. a belt filter, where it is washed with water from line 6. The washed material from the first filtering means 5 is then passed via line 7 to charge tank 8, which also receives water from line 9, sodium hydroxide solution, if desired, of about 50 wt. % concentration from line 10, and, if desired, an aqueous slurry containing from 0.01 to 50 wt. %, preferably 20 wt. % to 40 wt. %, seed crystals of ZSM-5, from line 11. If aluminum sulfate was not included in the line 1 feed to continuous reactor 3, then it may be added, if desired, to the charge tank 8 via line 12 as an aqueous solution of, for example, about 47 wt. % concentration. The contents of charge tank 8 are preferably stirred to maintain suspension of solids.

The resulting mixture from charge tank 8 is charged continuously or batch-wise via line 13 to a crystallizer 14, which also receives a charge of n-propylaminme via line 15 from a charge vessel 16. Crystallizer 14 is maintained under conditions sufficient for ZSM-5 to form, including a temperature of 80 to 250°C and a residence time of 3 to 100 hours. Stirring is effected during crystallization to provide adequate heat transfer and maintain the solids in suspension.

At completion of crystallization , an overhead comprising the n-propylamine and water is taken from the crystallizer 14 via line 17 to a condenser 18, and via line 19 from the condenser 18 to a separator 20, e.g., a distillation system. Product organic from the separator 20 may be passed via line 21a to charge vessel 16, whereas residue from the separator 20, comprising mostly water, is removed via line 21b. Fresh make-up organic is passed to charge vessel 16 via line 22 to insure insufficient quantity for crystallizer 14 demand. A slurry containing product ZSM-5 crystals is also removed from crystallizer 14 via line 23 and passed into a surge tank 24 with sufficient stirring to maintain suspension. For purposes of seeding further batches, a first part of the surge tank 24 slurry, e.g., up to about 10% wt. %, may be passed via line 25 to a slurry device 26 comprising a particle size reduction means, such as, for example, a ball mill, to maximize the surface area of the particles. Having undergone contact with the particle size reduction means of the device 26 the slurry is passed via line 11 to the charge tank 8 as needed.

A second part of the surge tank 24 slurry, e.g., from 90 wt. % to 100 wt. %, is passed via line 27 to a second filtering means 28, e.g., a belt filter, where it is washed firstly with water from line 29, and secondly with dilute solution of an ammonium salt, e.g. ammonium nitrate from line 30, sufficient to effect ion-exchange of the ZSM-5. The washed material from the second filtering means 28 is passed via line 31 to a dryer 32, which is conveniently operated at a temperature of 100°C to 180°C. A dried ammonium exchanged ZSM-5 product is recovered from dryer 32 via line 33. The resultant ZSM-5 produce can be converted from the ammonium form to the catalytically active hydrogen form by calcining, conveniently at 200-600°C.

In an alternative embodiment (not shown), no organic directing agent is added to the crystallizer 14 and the circuit 22, 16, 15, 17, 18, 19, 20, 21a and 21b is omitted from the process scheme shown in the drawing.

EXAMPLE 1

A silica precipitate precursor for zeolite synthesis was produced using the formulations given in Table 1.

TABLE 1

(Volume Basis)

Silicate Solution

| | |
|---|---|
| Sodium Silicate (Q-Brand 29% wt. $SiO_2$, 9% wt. $Na_2O$) | 100 parts |
| 50% wt. NaOH | 1.03 parts |
| $H_2O$ (Demineralized) | 98.9 parts |

Acid Solution

| | |
|---|---|
| 24% wt. $H_2SO_4$ | 67 parts |

The two solutions were reacted continuously at 30 min. residence time in a plastic vessel equipped with an overflow and mixer. The vessel was filled with water. The silicate solution and the acid solution were pumped into the vessel in a continuous manner.

The pH was controlled at about 8. The average residence time of the product was 30 minutes, and the product was discharged continuously from the vessel by an overflow tube.

The product was collected, filtered and washed with mineral water to be sulfate free and had the composition shown in Table 2.

TABLE 2

| | | |
|---|---|---|
| Sulfur | 0.005 | % |
| Silica | 91.3 | % |
| Alumina | less than 0.1 | % |
| Sodium | 1.5 | % |
| Ash at 540°C | 95.53 | % |

The resulting product was a suspension of agglomerated solids in the shape of microspheres. Because of the size and shape of the particles and because primary agglomeration had already taken place, the suspension exhibited low viscosities at high solids loadings (≥30%). This was in marked contrast to an equivalent, non-controlled neutralization which resulted in solid, non-stirrable mass. The average particle size of the precursor was 70$\mu$.

Example 2

Using the silica precursor produced in Example 1, ZSM-5 was produced in the absence of organic or seeds using the formulations of Runs A, B and C in Table 3.

## TABLE 3

### Crystallization of ZSM-5 Using Silica Precursor and No Organics

| Runs | A | B | C |
|---|---|---|---|
| **Formulation** | | | |
| Silica Precursor (44.48% solids), g | 8610 | 10600 | 10600 |
| Demineralized $H_2O$, g | 4382 | – | – |
| $Al_2(SO_4)_3$ $14H_2O$, g | 1260 | 1550 | 1550 |
| DM $H_2O$, g | 2000 | 3000 | 3000 |
| 50% NaOH, g | 1063 | 1800 | 1920 |
| **Conditions** | | | |
| Temp., °C | 160 | 160 | 175 |
| Agitation Rate, rpm | 250 | 250 | 250 |
| Solids Content, % wt | 24 | 30 | 30 |
| $OH^-/SiO_2$ | 0.16 | 0.24 | 0.26 |
| $SiO_2/Al_2O_3$ | 30 | 30 | 30 |
| **Crystallization Time, Hrs** | 32 | 19 | 9 |
| **Crystal Size Equivalence** (By Catalytic Test) | $(1-5\mu)$ | $(0.01-0.05\mu)$ | $(0.1-0.5\mu)$ |

The zeolite products produced had different crystal sizes as characterized by a catalytic screening test utilizing the conversion of EB/m-xylene.

The solids loading used in the formulations for runs B and C (Table 3) was higher than conventional synthesis. It is normally difficult to increase solids because of the high viscosity of the reaction mixture.

No seeding was used in the above runs, but crystallization would probably have proceeded faster with seed material. Seeding with ZSM-5 and zeolite beta have been demonstrated previously to affect crystallization time and crystal size.

Additional ZSM-5 production runs using the silica precursor, in the absence of organic directing agent are described in Tables 4 and 5:

## TABLE 4

### SILICA PRECURSOR NON-ORGANIC ZSM-5 SYNTHESIS

| Synthesis Mixture | D | E | F | G |
|---|---|---|---|---|
| Seeding, wt% solid | 0 | 0 | 1 | 1 |
| $SiO_2/Al_2O_3$ Molar | 29.4 | 32.1 | 31.9 | 31.9 |
| $OH^-/SiO_2$ Molar | .108 | .081 | .124 | .124 |
| $H_2O/SiO_2$ Molar | 5.05 | 4.99 | 7.45 | 7.45 |
| $OH^-/H_2O$ | 0.0215 | 0.0162 | 0.0166 | 0.0166 |
| % solids, wt% | 36.4 | 37.0 | 29.2 | 29.2 |
| **Reaction Conditions** | | | | |
| Temp. °C | 120 | 175 | 175 | 160 |
| RPM | 250 | 250 | 120 | 120 |
| Hrs | 145 | 12 | 5 | 12 |
| **Product Characterization** | | | | |
| Zeolite | ZSM-5 | ZSM-5 | ZSM-5 | ZSM-5 |
| $SiO_2/Al_2O_3$ | | | | |
| NaOH in $H_2O$ wt% | 14 | 12 | 9 | 9 |

10

TABLE 4 (continued)

SILICA PRECURSOR NON-ORGANIC ZSM-5 SYNTHESIS

| Synthesis Mixture | H | I | J | K |
|---|---|---|---|---|
| Seeding, wt% solid | 0 | 0 | 0 | 0 |
| $SiO_2/Al_2O_3$ Molar | 27.0 | 29.4 | 25.9 | 28.0 |
| $OH^-/SiO_2$ Molar | 0.017 | 0.018 | 0.123 | 0.092 |
| $H_2O/SiO_2$ Molar | 7.41 | 7.74 | 9.22 | 6.07 |
| $OH^-/H_2O$ | 0.0023 | 0.014 | 0.0133 | 0.0151 |
| % solids, wt% | 29.7 | 28.5 | 25.0 | 33.0 |

Reaction Conditions

| | H | I | J | K |
|---|---|---|---|---|
| Temp. °C | 175 | 175 | 175 | 175 |
| RPM | 120 | 120 | 250 | 250 |
| Hrs | 35 | 12 | 10 | 6 |

Product Characterization

| Zeolite | Amorphous | ZSM-5 | Mordenite | Mordenite |
|---|---|---|---|---|
| | | | ZSM-5 | ZSM-5 |
| $SiO_2/Al_2O_3$ | | | | |
| NaOH in $H_2O$ wt% | 7 | 9 | 9 | 11 |

TABLE 5

SILICA PRECURSOR NON-ORGANIC ZSM-5 SYNTHESIS

| Synthesis Mixture | L | M | N |
|---|---|---|---|
| Seeding wt% solids | 0 | 0 | 0 |
| $SiO_2/Al_2O_3$ Molar | 28.7 | 28.9 | 30.2 |
| $OH^-/SiO_2$ Molar | 0.72 | .110 | .106 |
| $H_2O/SiO_2$ Molar | 5.18 | 7.97 | 7.56 |
| $OH^-/H_2O$ Molar | .0139 | 0.0138 | 0.0140 |
| % solids, wt% | 36.2 | 27.9 | 29.0 |

Reaction Conditions

| | L | M | N |
|---|---|---|---|
| Temp, °C | 175 | 175 | 175 |
| RPM | 90 | 80 | 80 |
| Hrs | 12 | 12 | 12 |

Product Characterization

| Zeolite | Mordenite ZSM-5 | Trace Mord. | ZSM-5 | ZSM-5 |
|---|---|---|---|---|
| $SiO_2/Al_2O_3$ | 27 | 24 | 27 | |
| NaOH in $H_2O$, wt% | 12 | 9 | 9 | |

EXAMPLES 3 & 4

In these Examples, the effect of adding a small amount of an organic directing agent to shorten the zeolite crystallization time is shown. The results are shown in Table 6.

## Table 6

| Example | 3 | 4 |
|---|---|---|
| **Formulation** | | |
| Silica Precursor (44.48% solids), g | 13,220 | 13,220 |
| $Al_2(SO_4)_3 . 14 H_2O$, g | 966 | 966 |
| $H_2O$, g (Demineralized) | 4,526 | 4,526 |
| 50% NaOH, g | 1,330 | 1,025 |
| NPA, g | – | 240 |
| **Conditions** | | |
| Temp., °C | 120 to 140 | 120 |
| Agitation Rate, rpm | 120 | 120 |
| Solids Content, % wt | 30 | 30 |
| $OH^-/SiO_2$, mole ratio | 0.14 | 0.10 |
| $NPA/SiO_2$, mole ratio | – | 0.04 |
| $SiO_2/Al_2O_3$ | 60 | 60 |
| $H_2O/SiO_2$ | 7.6 | 7.5 |
| Crystallization Time, Hrs | 72 at 120°C 15 at 140°C | 43 |

## Claims

1. A method for making a zeolite comprising
   a) providing a solution of a silicate;
   b) providing a precipitating reagent which is effective to precipitate said silicate as silica from said solution;
   c) continuously contacting said solution with said precipitating reagent to effect continuous change of concentration of said silicate and to form an insoluble silica precipitate, having a particle size of 1-500 micrometre; and
   d) introducing said silica precipitate into a reaction mixture, which is maintained under conditions effective to convert said silica into the required zeolite and which contains 20-40% silica solids loading and 0 to 10 weight percent seed of the required zeolite.

2. The method of Claim 1 wherein a source of alumina is present in said crystallization reaction mixture.

3. The process of Claim 1 or Claim 2 wherein said precipitate is at least substantially free of aluminum or a source thereof.

4. The process of any preceding Claim wherein the zeolite produced is ZSM-5.

5. The method of Claim 4 wherein no organic directing agent is added to the crystallization reaction mixture and the mixture has the following molar composition:

| | |
|---|---|
| $SiO_2/Al_2O_3$ | = greater than 20 to 100 |
| $H_2O/SiO_2$ | = 1 to 200 |
| $OH^-/SiO_2$ | = 0.02 to 0.4 |
| $M_{2/n}O/SiO_2$ | = 0.02 to 0.5 |

wherein M is an alkali or alkaline earth metal of valence n.

6. The method of claim 4 wherein said conditions employed in (d) include a temperature of 140-200°C for 2 hours to 150 days.

7. The method of Claim 4 wherein up to 10 mole % of an organic directing agent R is present in the crystallization reaction mixture.

8. The method of Claim 7 wherein the crystallization reaction mixture has the following molar composition:

$$SiO_2/Al_2O_3 \quad = \quad \text{at least } 20$$
$$H_2O/SiO_2 \quad = \quad 0.5 \text{ to } 200$$
$$OH^-/SiO_2 \quad = \quad \text{up to } 0.4$$
$$R/SiO_2 \quad = \quad 0.1 \text{ to } 0.4$$
$$M_{2/n}O/SiO_2 \quad = \quad 0.02 \text{ to } 0.5$$

wherein M is an alkali or alkaline earth metal of valence n.

9. The method of Claim 7 or Claim 8 wherein the organic directing agent R is n-propylamine.

10. The method of any one of Claims 7 to 9 wherein said conditions employed in (d) include a temperature of 85-200°C for 2 hours to 150 days.

## Patentansprüche

1. Verfahren zur Herstellung eines Zeolith, welches umfaßt:
   a) Schaffung einer Lösung des Silicat;
   b) Bereitstellung eines Fällungsmittels, das für die Fällung des Silicats als Siliciumdioxid aus dieser Lösung effektiv ist;
   c) kontinuierlicher Kontakt dieser Lösung mit dem Fällungsmittel, um eine kontinuierliche Konzentrationsveränderung des Silicats zu bewirken und ein unlösliches gefälltes Siliciumdioxid zu bilden, das eine Partikelgröße von 1-500 $\mu$m aufweist; und
   d) Einführung des gefällten Siliciumdioxids in die Reaktionsmischung, die bei wirksamen Bedingungen gehalten wird, um das Siliciumdioxid in den gewünschten Zeolith umzuwandeln, und die eine Belastung von 20-40% Siliciumdioxidfeststoffe und 0 bis 10 Gew.-% Kristallkeime des geforderten Zeolith enthält.

2. Verfahren nach Anspruch 1, worin in der Reaktionsmischung für die Kristallisation eine Quelle von Aluminiumoxid vorhanden ist.

3. Verfahren nach Anspruch 1 oder 2, worin der gefällte Stoff zumindest im wesentlichen frei von Aluminium oder einer Quelle davon ist.

4. Verfahren nach einem der vorstehenden Ansprüche, worin der hergestellte Zeolith ZSM-5 ist.

5. Verfahren nach Anspruch 4, worin der Reaktionsmischung zur Kristallisation kein organisches Leitmittel zugesetzt wird und diese Mischung die folgende molare Zusammensetzung aufweist:

| | |
|---|---|
| $SiO_2/Al_2O_3$ | = größer als 20 bis 100 |
| $H_2O/SiO_2$ | = 1 bis 200 |
| $OH^-/SiO_2$ | = 0,02 bis 0,4 |
| $M_{2/n}O/SiO_2$ | = 0,02 bis 0,5 |

worin M ein Alkali- oder Erdalkalimetall der Wertigkeit n ist.

**6.** Verfahren nach Anspruch 4, worin die bei (d) angewendeten Bedingungen eine Temperatur von 140-200°C über einen Zeitraum von 2 Stunden bis 150 Tagen umfassen.

**7.** Verfahren nach Anspruch 4, worin in der Reaktionsmischung für die Kristallisation bis zu 10 Mol-% des organischen Leitmittels R vorhanden sind.

**8.** Verfahren nach Anspruch 7, worin die Reaktionsmischung für die Kristallisation die folgende molare Zusammensetzung aufweist:

| | |
|---|---|
| $SiO_2/Al_2O_3$ | = mindestens 20 |
| $H_2O/SiO_2$ | = 0,5 bis 200 |
| $OH^-/SiO_2$ | = bis zu 0,4 |
| $R/SiO_2$ | = 0,1 bis 0,4 |
| $M_{2/n}O/SiO_2$ | = 0,02 bis 0,5 |

worin M ein Alkali- oder Erdalkalimetall der Wertigkeit n ist.

**9.** Verfahren nach Anspruch 7 oder 8, worin das organische Leitmittel R n-Propylamin ist.

**10.** Verfahren nach einem der Ansprüche 7 bis 9, worin die in (d) angewendeten Bedingungen eine Temperatur von 85-200°C über einen Zeitraum von 2 Stunden bis 150 Tagen umfassen.

**Revendications**

**1.** Un procédé de préparation d'une zéolite comprenant les étapes suivantes:
a) on prépare une solution de silicate;
b) on prépare un réactif de précipitation efficace pour précipiter ce silicate sous la forme de silice à partir de cette solution;
c) on met en continu cette solution au contact de cet agent de précipitation pour effectuer un changement en continu de la concentration de ce silicate et pour former un précipité de silice insoluble dont les particules ont une dimension de 1 à 500 $\mu$m; et
d) on introduit ce précipité de silice dans un mélange réactionnel maintenu dans des conditions efficaces pour convertir cette silice en zéolite recherchée et qui contient de 20 à 40% de charge de matière sèche de silice et de 0 à 10% en poids de germe de la zéolite recherchée.

**2.** Le procédé selon la revendication 1, caractérisé en ce qu'une source d'alumine est présente dans ce mélange réactionnel de cristallisation.

**3.** Le procédé selon la revendication 1 ou 2, caractérisé en ce que ce précipité est au moins sensiblement exempt d'aluminium ou d'une source de celui-ci.

**4.** Le procédé selon l'une quelconque des revendications précédentes, caractérisé en ce que la zéolite obtenue est la ZSM-5.

**5.** Le procédé selon la revendication 4, caractérisé en ce que aucun agent d'orientation organique n'est ajouté au mélange réactionnel de cristallisation et le mélange présente la composition molaire suivante:

| | |
|---|---|
| . $SiO_2/Al_2O_3$ | = supérieur à 20 à 100 |
| . $H_2O/SiO_2$ | = 1 à 200 |
| . $OH^-/SiO_2$ | = 0,02 à 0,4 |
| . $M_{2/n}O/SiO_2$ | = 0,02 à 0,5 |

dans laquelle:

M est un métal alcalin ou alcalino-terreux de valence n.

**6.** Le procédé selon la revendication 4, caractérisé en ce que ces conditions employées dans (d) comprennent une température de 140 à 200°C pendant une durée de 2 heures à 150 jours.

**7.** Le procédé selon la revendication 4, caractérisé en ce que jusqu'à 10% en mole d'un agent R d'orientation organique est présent dans le mélange réactionnel de cristallisation.

**8.** Le procédé selon la revendication 7, caractérisé en ce que la composition molaire du mélange réactionnel est la suivante:

| | |
|---|---|
| . $SiO_2/Al_2O_3$ | = au moins 20 |
| . $H_2O/SiO_2$ | = 0,5 à 200 |
| . $OH^-/SiO_2$ | = jusqu'à 0,4 |
| . $R/SiO_2$ | = 0,1 à 0,4 |
| . $M_{2/n}O/SiO_2$ | = 0,02 à 0,5 |

dans laquelle:

M est un métal alcalin ou alcalino-terreux de valence n.

**9.** Procédé selon la revendication 7 ou la revendication 8, caractérisé en ce que l'agent directeur organique R est la n-propylamine.

**10.** Le procédé selon l'une quelconque des revendications 7 à 9, caractérisé en ce que les conditions employées dans (d) comprennent une température de 85 à 200°C pendant une durée de 2 heures à 150 jours.

# FIG. I